# EUROPEAN PATENT SPECIFICATION

(11) **EP 0 445 873 B1**
(45) Date of publication and mention of the grant of the patent: **25.08.1993**
(21) Application number: 91200437.1
(22) Date of filing: 01.03.1991
(51) Int. Cl.: B60K 6/02

(54) **Hybrid propulsion system for vehicles, in particular for road vehicles**
Hybrides Antriebssystem für Fahrzeuge, insbesondere Strassenfahrzeuge
Système hybride de propulsion pour véhicules, notamment véhicules routiers

(30) Priority: 08.03.1990 IT 1962190
(43) Date of publication of application: 11.09.1991
(73) Proprietor: PIAGGIO VEICOLI EUROPEI S.p.A., 56025 Pontedera (Pisa) (IT)
(72) Inventor: Masut, Lucio, I-56031 Bientina, Pisa (IT)
(74) Representative: Henke, Erwin

(56) References cited:
- EP-A- 119 793
- EP-A- 0 082 932
- GB-A- 993 185
- GB-A- 1 440 484
- GB-A- 2 013 149
- US-A- 4 405 029
- US-A- 4 469 187

## Description

This invention relates to a hybrid propulsion system for vehicles, in particular for road vehicles, of the type defined by the preamble of claim 1. Such a hybrid propulsion system is known from EP-A-119793.

Hybrid propulsion vehicles are, in the most general sense of the term, those vehicles equipped with more than one prime mover. Of the various possible configurations, that which has been most widespread up to the present time comprises two propulsion units, one of which is a conventional internal combustion engine and the other is an electric motor powered by a battery.

The connection scheme for the two propulsion units can be of either series or parallel type. In the series configuration, the internal combustion engine uses an alternator or in any event a rotary generator to continuously charge the battery which powers the electric motor, which alone transmits mechanical energy to the vehicle wheels.

In this case the internal combustion engine provides only the average power required for advancement, whereas the acceleration peaks are provided by the battery. The internal combustion engine can therefore be of a smaller size than that required for a similar conventional vehicle, and moreover as it works at constant speed it can operate at an optimum point, with high efficiency and low pollutant emission.

In the parallel configuration the mechanical power provided by the internal combustion engine is divided into two fractions, one fraction being absorbed by the battery charging generator and the remaining fraction being transferred directly to the drive wheels. Compared with the preceding configuration there is the advantage of greater overall efficiency as double energy conversion, ie from mechanical to electrical and from electrical to mechanical, is not required, as instead is required with the series configuration. The fields of application of the two configurations differ in that whereas the first is applied when the vehicle speed requires continuous adjustment, this being easily obtainable with the electric motor, the other configuration is used when the overall energy advantages and the reliability of the propulsion system are more important.

In both these configurations the engine and motor present on the vehicle operate simultaneously. A hybrid propulsion system has also been proposed in which only one of the two propulsion units operates in determined situations, and only the other operates in the remaining situations. For example, if one of the propulsion units is electrical and the other is an internal combustion engine, the electrical propulsion could represent the only valid means in determined areas in which legislative restrictions of an ecological nature prohibit the circulation of vehicles with a conventional internal combustion engine. However if this latter is combined with an electrical propulsion unit and used as an alternative to it it provides the vehicle with sufficient independence, an independence which as is well known is relatively limited in an electrical vehicle essentially because of the still relatively primitive technology of its battery systems.

In a road vehicle, passage from one type of propulsion to the other must occur easily and with very modest means, so as not to complicate the vehicle operation and moreover not to aggravate the final cost of the system.

From EP-A-119 793 a driveline for regenerative braking is also known, comprising a diesel engine which drives an axle through a continuously-variable-ratio transmission and a flywheel system is coupled to the input of the transmission by a reduction gearing. Over-running clutches ensure that the transmission selects whichever is the faster of the engine or the flywheel and a multiplate clutch parallel with the flywheel over-running clutch is engaged for regenerative braking.

The object of the present invention is to provide a hybrid propulsion system for vehicles, with which the passage from one type of propulsion to the other occurs in a simple and instantaneous manner, while at the same time preventing the motion generated by one of the two propulsion units to be transmitted to the other.

To this end, a hybrid propulsion system for vehicles in accordance with the present invention is characterized by the features specified in the characterising part of claim 1.

The advantages and characteristics of the invention will be more apparent from the description of two embodiments thereof given hereinafter by way of example with reference to the accompanying drawings in which:
Figure 1 is a schematic representation of a first hybrid propulsion system for a road vehicle according to the invention;
Figure 2 is a schematic representation of a second hybrid propulsion system for a road vehicle according to the invention.

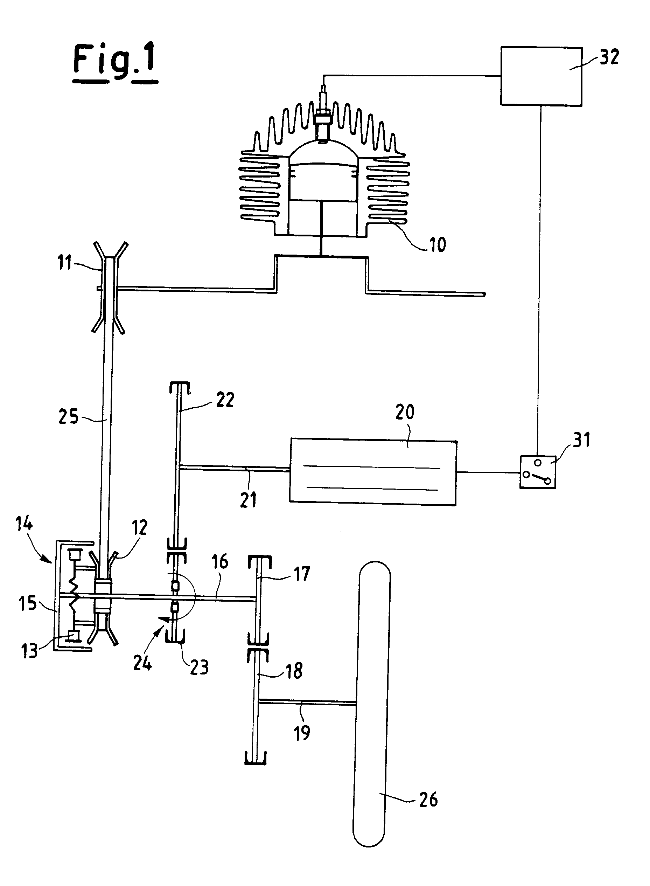

Figure 1 shows a vehicle internal combustion engine 10 connected to an infinitely variable primary transmission pulley 11 of the frusto-conical type. The primary pulley 11 is connected by a belt 25 to a secondary transmission pulley 12. The secondary pulley 12 is connected to a centrifugal weight system 13 of an automatic engagement clutch 14. A driven element 15 of the clutch 14 is connected by the transmission shaft 16 to a reduction gear composed of a gear wheel 17 rigid with the shaft 16 and a gear wheel 18 which engages the gear wheel 17. The gear wheel 18 is connected directly to a shaft 19 which transmits motion to a vehicle ground wheel 26.

An electric motor 20 is connected via an output shaft 21 to a gear wheel 22 which engages a further gear wheel 23. The gear wheel 23 is connected to the shaft 16 via a free wheel 24 in such a manner as to transmit the motion generated by the electric motor 20 only if its rotational speed exceeds that of the shaft 16.

The system is such that the motion generated by one of said propulsion units, when the other is deactivated from transmitting drive power to the ground wheel, is transmitted only to the transmission members located downstream of the automatic engagement centrifugal clutch 14.

In particular, when the internal combustion engine 10 is activated, it transmits motion to the ground wheel 26 via the pulley 11, the belt 25, the pulley 12, the clutch 14, the transmission shaft 16, the gear wheels 17 and 18, and the shaft 19. The said connection involving the free wheel 24 prevents the notion generated by the internal combustion engine 10 being transmitted to the electric motor 20 via the pair of gear wheels 23 and 22.

When the electric motor 20 is activated, it transmits motion to the ground wheel 26 via the shaft 21, the gear wheels 22 and 23, the free wheel 24, the shaft 16, the gear wheels 17 and 18 and the shaft 19. In this case the shaft 16 drags with it the driven element 15 of the automatic engagement centrifugal clutch 14 under no load, so preventing motion being transmitted to the internal combustion engine 10.

Passage from one type of propulsion, ie propulsion by the internal combustion engine 10, to the other type of propulsion, ie propulsion by the electric motor 20, is thus effected easily and instantaneously.

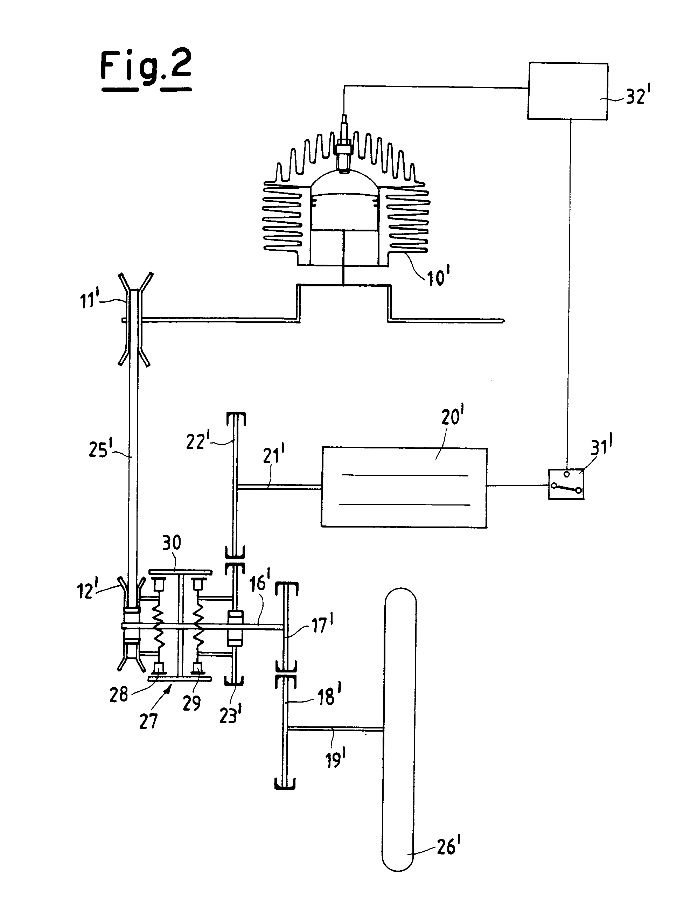

The embodiment of Figure 2 in which the elements illustrated in Figure 1 are indicated by the same reference numerals followed by an apex differs from the embodiment of Figure 1 only with regard to the motion transmission from the gear wheel 23' to the transmission shaft 16'. In this respect, in this embodiment there is no longer the free wheel 24, but instead the architecture of the automatic engagement centrifugal clutch, here indicated by 27, is different in that it comprises two series of centrifugal weights, namely 28 connected to the secondary pulley 12' of the infinitely variable ratio transmission connected to the internal combustion engine 10,' and 29 connected to the gear wheel 23' connected to the electric motor 20'. A driven element 30 of the clutch 27, this element being connected to the shaft 16', is rotated either by the motion originating from the internal combustion engine 10' or by the motion originating from the electric motor 20'. In either case the motion is transmitted only to the shaft 16' and then via the gear wheels 17', 18' and the shaft 19' to the vehicle ground wheel 26'. Specifically, when the internal combustion engine 10' is activated is transmits motion to the ground wheel 26' via the pulley 11', the belt 25', the pulley 12', the element 30 driven by the weights 28, the shaft 16', the gear wheels 17', 18' and the shaft 19'. In this situation in which the internal combustion engine 10' is activated and the electric motor 11' deactivated, the centrifugal weights 29 are at rest so that motion is not transmitted from the former to the latter.

When the electric motor 20' is activated it transmits motion to the vehicle ground wheel 26' via the shaft 21', the gear wheels 22', 23', the element 30 driven by the weights 29, the shaft 16', the gear wheels 17', 18' and the shaft 19'. In this situation the weights 28 are at rest as the internal combustion engine 10' is inactive, with the result that motion is not transmitted from the electric motor 20' to the internal combustion engine 10'.

The propulsion system of Figure 2 is therefore also such that the motion generated by one of said propulsion units, when the other is deactivated, is transmitted only to those transmission members located downstream of the automatic engagement clutch 27.

Again in this case, passage from one type of propulsion to the other is effected easily and instantaneously.

Both in the embodiment of Figure 1 and in the embodiment of Figure 2 protection devices are provided to prevent the two propulsion units being inadvertently activated simultaneously. For example, the electric motor can be powered simply by operating a two-way switch indicated by 31 in Figure 1 and by 31' in Figure 2, thus breaking an electrical ignition circuit indicated by 32 in Figure 1 and by 32' in Figure 2, which ignites the mixture in the internal combustion engine.

As an alternative to that shown, the internal combustion engine could be connected to the vehicle ground wheel via a manually operated clutch which can be locked in the disengaged position by any means for locking the clutch operating member. The electric motor can be connected to a transmission shaft rigid with the clutch driven element downstream of the clutch via a free wheel or to an automatic engagement clutch of the aforesaid type.

The described hybrid propulsion systems can be applied to any type of vehicle and can drive one or more ground wheels of the vehicle.

## Claims

1. A hybrid propulsion system for vehicles, in particular for road vehicles having at least one driving ground wheel (26;26'), comprising a first propulsion unit (10;10') connected by means of a first unidirectional motion transmission clutch (14;27) to a transmission shaft (16;16') for motion transmission to said ground wheel (26;26') and a second propulsion unit (20;20') which by means of a second unidirectional motion transmission clutch (24;27) is in drive connection with the driven element (15;30) of said first unidirectional motion transmission clutch (14;27) in such a manner, that the drive power generated by one of said propulsion units (10,20; 10',20') to drive said ground wheel (26,26') is prevented from being transmitted to the other propulsion unit, said first propulsion unit being an internal combustion engine (10;10'), characterised in that said second propulsion unit is a battery powered electric motor (20;20'), that said first unidirectional motion transmission clutch is an automatic engagement centrifugal clutch (14; 27), wherein the output shaft of said internal combustion engine (10;10') is connected by means of an infinitely variable speed transmission (11-12, 25; 11'-12',25') to the driving element (13;28) of said automatic engagement centrifugal clutch (14;27), the driven element (15;30) of which being connected to said transmission shaft (26;16'), and that means (31,32; 31',32) are provided for preventing simultaneous activation of said internal combustion engine (10;10') and of said battery powered electric motor (20;20') to transmit simultaneously drive power to said ground wheel (26;26').

2. A hybrid propulsion system as claimed in claim 1, characterised in that said second unidirectional motion transmission clutch is a free wheel (24), the output shaft (21) of said battery powered electric motor (20) being in drive connection with said transmission shaft (16) by means of gear wheels (22,23) and of said free wheel (24).

3. A hybrid propulsion system as claimed in claim 1, characterised in that said second unidirectional motion transmission clutch is an automatic engagement centrifugal clutch (27), the series of centrifugal weights (29) of which being connected by means of gear wheels (22',23') to the output shaft (21') of said battery powered electric motor (20') and acting on the same driven element (30) on which also acts the series of centrifugal weights (28) of said automatic engagement centrifugal clutch (27) constituting said first unidirectional motion transmission clutch.

4. A hybrid propulsion system as claimed in claim 1, characterised in that said means for preventing simultaneous activation of said internal combustion engine (10, 10') and of said battery powered electric motor (20; 20') comprise a two-way switch (31;31') to power said electric motor (20; 20') and at the same time to break an electrical ignition circuit (32;32') for the internal combustion engine (10;10').

## Patentansprüche

1. Hybrides Antriebssystem für Fahrzeuge, insbesondere Straßenfahrzeuge, mit wenigstens einem Antriebsrad (26,26'), umfassend eine erste Antriebseinheit (10,10'), welche über eine erste in einer Richtung wirksame Bewegungsübertragungskupplung (14,27) mit einer Getriebewelle (16,16') zur Bewegungsübertragung auf das Rad (26,26') verbunden ist, und eine zweite Antriebseinheit (20,20'), welche über eine zweite in einer Richtung wirksame Bewegungsübertragungskupplung (24,27) derart in Antriebsverbindung mit dem angetriebenen Element (15,30) der ersten in einer Richtung wirksamen Bewegungsübertragungskupplung (14,27) steht, daß verhindert wird, daß von einer der beiden Antriebseinheiten (10,20;10',20') erzeugte Antriebskraft für den Antrieb des Rades (26,26') auf die andere Antriebseinheit übertragen wird, wobei die erste Antriebseinheit von einer verbrennungskraftmaschine (10,10') gebildet ist, dadurch gekennzeichnet, daß die zweite Antriebseinheit (20,20') von einem batteriebetriebenen Elektromotor gebildet ist, daß die erste in einer Richtung wirksame Bewegungsübertragungskupplung von einer automatischen Fliehkraftkupplung (14,27) gebildet ist, wobei die Abtriebswelle der verbrennungskraftmaschine (10,10') mittels eines stufenlosen Getriebes (11-12,25;11'-12',25') mit dem Antriebselement (13; 28) der automatischen Fliehkraftkupplung (14;27) verbunden ist, deren Antriebselement (15;30) mit der Getriebewelle (16;16') verbunden ist, und daß Mittel (31,32;31',32') vorgesehen sind, um die gleichzeitige Aktivierung der Verbrennungskraftmaschine (10;10') und des batteriebetriebenen Elektromotors (20,20') zur Übertragung von Antriebsenergie auf das Antriebsrad (26,26') zu verhindern.

2. Hybrides Antriebssystem nach Anspruch 1, dadurch gekennzeichnet, daß die zweite in einer Richtung wirksame Bewegungsübertragungskupplung ein freies Rad (24) ist, wobei die Abtriebswelle (21) des batteriebetriebenen Elektromotors (20) in Antriebsverbindung mit der Getriebewelle (16) über Zahnräder (22,23) und das freie Rad (24) steht.

3. Hybrides Antriebssystem nach Anspruch 1, dadurch gekennzeichnet, daß die zweite in einer Richtung wirksame Bewegungsübertragungskupplung eine automatische Fliehkraftkupplung (27) ist, wobei deren Satz von Zentrifugalgewichten (29) mittels Zahnrädern (22',23') mit der Abtriebswelle (21') des batteriebetriebenen Elektromotors (20') verbunden ist und auf das selbe Antriebselement (30) einwirkt, auf welches auch der Satz von Zentrifugalgewichten (28) der automatischen Fliehkraftkupplung (27) wirkt, welche die erste in einer Richtung wirksame Bewegungsübertragungskupplung darstellt.

4. Hybrides Antriebssystem nach Anspruch 1, dadurch gekennzeichnet, daß die Mittel zum Verhindern der gleichzeitigen Aktivierung der Verbrennungskraftmaschine (10,10') und des batteriebetriebenen Elektromotors (20;20') einen Zweiwegschalter (31;31') umfassen, um den Elektromotor (20;20') anzutreiben und zur selben Zeit den elektrischen Zündkreislauf (32;32') der Verbrennungskraftmaschine (10;10') zu unterbrechen.

## Revendications

1. Système hybride de propulsion pour véhicules, notamment pour véhicules routiers, comportant au moins une roue de base d'entraînement (26; 26'), comprenant une première unité de propulsion (10; 10') reliée au moyen d'un premier embrayage (14; 27) de transmission de mouvement unidirectionnel à un axe de transmission (16; 16') pour la transmission du mouvement à ladite roue de base (26; 26') et une seconde unité de propulsion (20; 20') qui, au moyen d'un second embrayage (24; 27) de transmission de mouvement unidirectionnel est en relation d'entraînement avec l'élément d'entraînement (15; 30) dudit premier embrayage (14; 27) de transmission de mouvement unidirectionnel de manière que la puissance d'entraînement engendrée par une desdites unités de propulsion (10, 20; 10', 20') entraînant ladite roue de base (26; 26') ne puisse pas être transmise à l'autre unité de propulsion, ladite première unité de propulsion étant un moteur à combustion interne (10; 10'), caractérisé en ce que ladite seconde unité de propulsion est un moteur électrique alimenté par batterie (20; 20'), en ce que ledit premier embrayage de transmission de mouvement unidirectionnel est un embrayage centrifuge à engagement automatique (14; 27), dans lequel l'arbre de sortie dudit moteur à combustion interne (10; 10') est relié au moyen d'une transmission de vitesse infiniment variable (11-12, 25; 11'-12', 25') à l'élément d'entraînement (13; 28) dudit embrayage centrifuge à engagement automatique (14; 27), dont l'élément d'entraînement (15; 30) est relié audit arbre de transmission (16; 16'), et en ce que des moyens (31, 32; 31', 32') sont prévus pour empêcher l'activation simultanée dudit moteur à combustion interne (10; 10') et dudit moteur électrique alimenté par batterie (20; 20') pour transmettre simultanément la puissance d'entraînement à ladite roue de base (26; 26').

2. Système hybride de propulsion suivant la revendication 1, caractérisé en ce que ledit second embrayage de transmission de mouvement unidirectionnel est une roue libre (24), l'arbre de sortie (21) dudit moteur électrique alimenté par batterie (20) étant en relation d'entraînement avec ledit arbre de transmission (16) au moyen de roues dentées (22, 23) et de ladite roue libre (24).

3. Système hybride de propulsion suivant la revendication 1, caractérisé en ce que ledit second embrayage de transmission de mouvement unidirectionnel est un embrayage centrifuge à engagement automatique (27), dont la série de masselottes centrifuges (29) est reliée au moyen de roues dentées (22', 23') à l'arbre de sortie (21') dudit moteur électrique alimenté par batterie (20') et agit sur le même élément d'entraînement (30) sur lequel agit aussi la série de masselottes centrifuges (28) dudit embrayage centrifuge à engagement automatique (27) constituant ledit premier embrayage de transmission de mouvement unidirectionnel.

4. Système hybride de propulsion suivant la revendication 1, caractérisé en ce que lesdits moyens empêchant l'activation simultanée dudit moteur à combustion interne (10; 10') et dudit moteur électrique alimenté par batterie (20; 20') comprennent un contact (31; 31') à deux directions pour alimenter ledit moteur électrique (20; 20') et en même temps pour interrompre un circuit d'allumage électrique (32; 32') du moteur à combustion interne (10; 10').
